# EUROPEAN PATENT APPLICATION

(11) **EP 4 614 268 A1**
(43) Date of publication of application: **10.09.2025**
(21) Application number: 25153538.1
(22) Date of filing: 23.01.2025
(51) Int. Cl.: G05B 23/02, G06N 20/00

(54) **TRAINING DATA GENERATION APPARATUS, METHOD, AND PROGRAM**

(30) Priority: 08.03.2024 JP 2024036095
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: Taguchi, Yasunori, Tokyo, 105-0023 (JP); Nakata, Kouta, Tokyo, 105-0023 (JP); Naito, Susumu, Tokyo, 105-0023 (JP); Tominaga, Shinya, Kawasaki-shi, Kanagawa, 212-0013 (JP); Takado, Naoyuki, Kawasaki-shi, Kanagawa, 212-0013 (JP); Miyake, Ryota, Kawasaki-shi, Kanagawa, 212-0013 (JP); Aoki, Toshio, Tokyo, 105-0023 (JP)
(74) Representative: Hoffmann Eitle

(57) **Abstract**

According to one embodiment, a training data generation apparatus (1) includes an acquisition unit (11), a division unit (12), a detection unit (13), and a generation unit (14). The acquisition unit (11) acquires operation data related to an operation state of a device in a predetermined period. The division unit (12) divides the operation data into at least temporary training data and temporary test data. The detection unit (13) detects an anomaly value from the temporary test data based on the temporary training data. The generation unit (14) generates training data from the operation data by excluding an anomaly period in which the anomaly value is detected from the predetermined period.

## Description

### FIELD

Embodiments described herein relate generally to a training data generation apparatus, method, and program.

### BACKGROUND

An industrial system (examples: infrastructure facility, manufacturing facility) includes a plurality of devices, and a process of each device is controlled. Stopping the industrial system incurs social and economic losses. In order to keep an industrial system healthy, it is necessary to monitor an operation state of the industrial system.

For example, an operation state of the industrial system is monitored by a machine training model. The machine training model uses, as training data, operation data (normal data) in a period (normal period) in which the device is in a normal operation state. In a case of being trained on this training data, the machine training model can detect an anomaly value from arbitrary operation data of the device.

Conversely, the machine training model may use operation data (anomaly data) for a period (anomaly period) in which the device is in an anomaly operation state as training data. In a case where the machine training model is trained on the training data, it is difficult for the machine training model to detect an anomaly value from arbitrary operation data of the device. Therefore, it is required to appropriately generate the training data so that the training data includes normal data and does not include anomaly data.

### BRIEF DESCRIPTION OF DRAWINGS

FIG. 1 is a functional configuration diagram of a training data generation apparatus according to a first embodiment.
FIG. 2 is an operation flowchart of the training data generation apparatus according to the first embodiment.
FIG. 3 is an illustrative diagram illustrating training data generation processing according to the first embodiment.
FIG. 4 is an illustrative diagram illustrating division processing of operation data according to a first modification of the first embodiment.
FIG. 5 is an illustrative diagram illustrating division processing of operation data according to a second modification of the first embodiment.
FIG. 6 is an illustrative diagram illustrating division processing of operation data according to a third modification of the first embodiment.
FIG. 7 is an illustrative diagram illustrating anomaly value detection processing according to the third modification of the first embodiment.
FIG. 8 is an illustrative diagram illustrating division processing of operation data according to a fourth modification of the first embodiment.
FIG. 9 is a first illustrative diagram illustrating anomaly value detection processing according to a fourth modification of the first embodiment.
FIG. 10 is a second illustrative diagram illustrating anomaly value detection processing according to the fourth modification of the first embodiment.
FIG. 11 is a functional configuration diagram of a training data generation apparatus according to a second embodiment.
FIG. 12 is an operation flowchart of the training data generation apparatus according to the second embodiment.
FIG. 13 is a frequency distribution diagram of temporary training data according to a second modification of the second embodiment.
FIG. 14 is a frequency distribution diagram according to a third modification of the second embodiment.
FIG. 15 is an illustrative diagram illustrating anomaly value detection processing according to a fourth modification of the second embodiment.
FIG. 16 is a functional configuration diagram of a training data generation apparatus according to a third embodiment.
FIG. 17 is an operation flowchart of the training data generation apparatus according to the third embodiment.
FIG. 18 is an illustrative diagram illustrating anomaly value detection processing according to the third embodiment.
FIG. 19 is a frequency distribution diagram of operation data and reference data according to the third embodiment.
FIG. 20 is a hardware configuration diagram of the training data generation apparatus according to each embodiment.

### DETAILED DESCRIPTION

In general, according to one embodiment, a training data generation apparatus (1) includes an acquisition unit (11), a division unit (12), a detection unit (13), and a generation unit (14). The acquisition unit (11) acquires operation data related to an operation state of a device in a predetermined period. The division unit (12) divides the operation data into at least temporary training data and temporary test data. The detection unit (13) detects an anomaly value from the temporary test data based on the temporary training data. The generation unit (14) generates training data from the operation data by excluding an anomaly period in which the anomaly value is detected from the predetermined period.

Hereinafter, embodiments will be described with reference to the drawings. In the following embodiments, portions denoted by the same reference numerals perform similar operations, and redundant description will be omitted as appropriate.

### (First Embodiment)

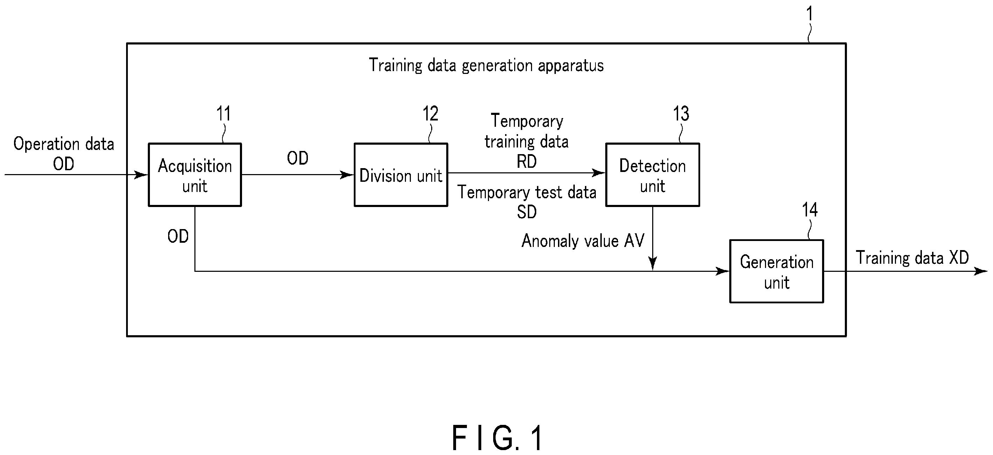

FIG. 1 is a functional configuration diagram of a training data generation apparatus 1 according to a first embodiment. The training data generation apparatus 1 is an apparatus that generates training data XD from operation data OD. The training data generation apparatus 1 includes an acquisition unit 11, a division unit 12, a detection unit 13, and a generation unit 14.

The acquisition unit 11 acquires various data. The acquisition unit 11 acquires the operation data OD regarding an operation state of the device in a predetermined period. The acquisition unit 11 acquires the operation data OD from the outside of the training data generation apparatus 1. The acquisition unit 11 transmits the acquired operation data OD to the division unit 12 and the generation unit 14. The operation data OD is also referred to as "candidate data".

The division unit 12 divides various data. The division unit 12 divides the operation data OD into at least temporary training data RD and temporary test data SD. The division unit 12 transmits the divided temporary training data RD and temporary test data SD to the detection unit 13.

The detection unit 13 detects various data. The detection unit 13 detects an anomaly value AV from the temporary test data SD based on the temporary training data RD. The detection unit 13 transmits the detected anomaly value AV to the generation unit 14. The anomaly value AV is also referred to as an "anomaly candidate". The anomaly value AV may include an anomaly sign.

The generation unit 14 generates various data. The generation unit 14 generates the training data XD from the operation data OD by excluding a period (anomaly period) in which the anomaly value AV is detected from a predetermined period of the operation data OD. The generation unit 14 outputs the generated training data XD to the outside of the training data generation apparatus 1.

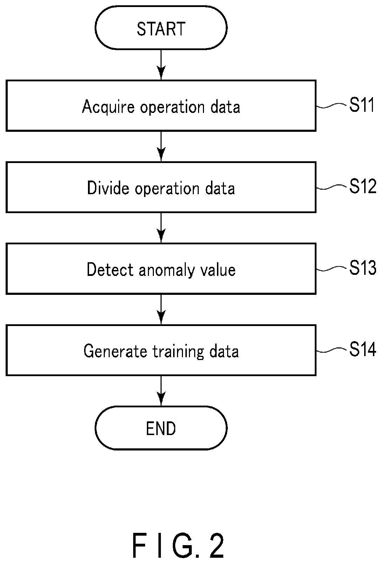

FIG. 2 is an operation flowchart of the training data generation apparatus 1 according to the first embodiment. The training data generation apparatus 1 sequentially executes each processing according to steps S11 to S14.

(Step S11) First, the training data generation apparatus 1 acquires the operation data OD through the acquisition unit 11. The operation data OD is time-series data related to an operation state of a predetermined device in an industrial system. The operation data OD may be time-series data related to each of a plurality of process variables indicating an operation state of a predetermined device. Each process variable may be a measured value (examples: temperature, pressure, speed, acceleration, current, voltage) from each sensor installed in a predetermined device.

In a case where a predetermined device is affected by the periodic variation, the period of the operation data OD related to the predetermined device may be set to one cycle or more. For example, in a case where the predetermined device is affected by the seasonal variation, the period of the operation data OD is set to one year or more. The operation data OD may include values sampled from each sensor at any time interval (e.g., 1 minute).

(Step S12) Next, the training data generation apparatus 1 divides the operation data OD through the division unit 12. The division unit 12 divides the operation data OD acquired in step S11 into the temporary training data RD and the temporary test data SD. The period of the temporary training data RD does not overlap the period of the temporary test data SD. The period of the temporary training data RD may be longer than the period of the temporary test data SD.

In particular, in a case where the predetermined device is affected by the seasonal variation, the period of the temporary test data SD related to the predetermined device may be set to be less than the length of each season of spring, summer, and autumn (for example, less than three months in Japan). In a case where the period of the temporary test data SD is set to be equal to or longer than the length of each season, it can be erroneously detected that the seasonal variation such as the air temperature and the water temperature is the anomaly value AV.

(Step S13) Subsequently, the training data generation apparatus 1 detects the anomaly value AV through the detection unit 13. The detection unit 13 uses the temporary training data RD and the temporary test data SD divided in step S12. The detection unit 13 assumes that the temporary training data RD is data in a normal state (normal data), and detects the anomaly value AV from the temporary test data SD.

The detection unit 13 may determine whether or not the value of the temporary test data SD is included in a value range between the maximum value and the minimum value related to the temporary training data RD. The detection unit 13 detects the value of the temporary test data SD not included in the value range as the anomaly value AV. The detection unit 13 may detect a period (anomaly period) in which anomaly value AV is detected in temporary test data SD.

(Step S14) Finally, the training data generation apparatus 1 generates the training data XD through the generation unit 14. The generation unit 14 uses the anomaly value AV (or anomaly period) detected in step S13. The generation unit 14 generates the training data XD from the operation data OD by excluding the period (anomaly period) in which the anomaly value AV is detected from the operation data OD.

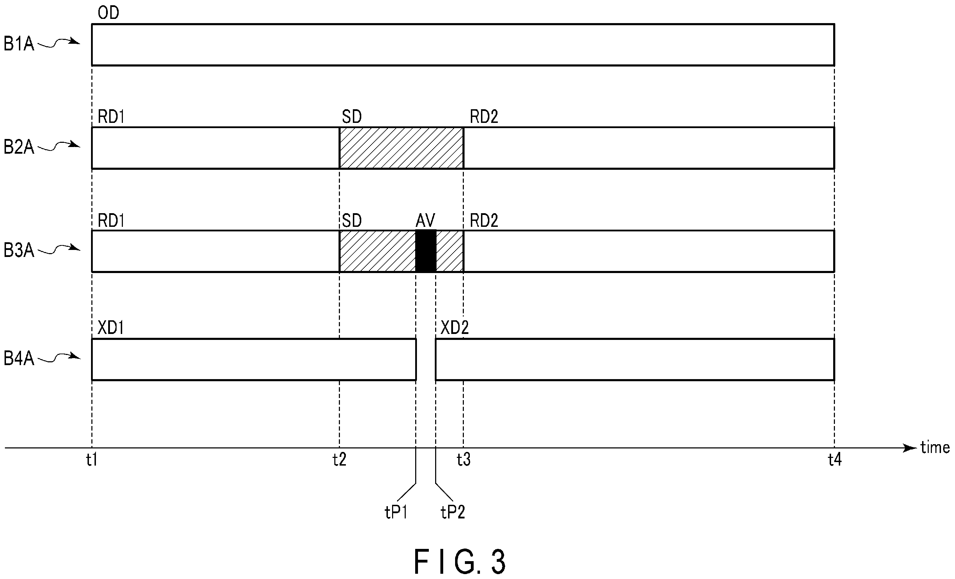

FIG. 3 is an illustrative diagram illustrating generation processing of the training data XD according to the first embodiment. FIG. 3 sequentially illustrates each processing according to steps S11 to S14 in FIG. 2. A period of each data in each processing is indicated by bands B1A to B4A. For convenience of description, the period is expressed as [start time, end time] or (start time, end time). In a closed section represented by [A, B], the start time and the end time are included in the section. In an open section represented by (A, B), the start time or the end time is not included in the section.

As illustrated in a band B1A of a first stage, the acquisition unit 11 acquires the operation data OD (see step S11). The period of the operation data OD is [t1, t4].

As illustrated in a band B2A of a second stage, the division unit 12 divides the operation data OD into two pieces of temporary training data RD1 and RD2 and one piece of temporary test data SD (see step S12). The period of the temporary training data RD1 is [t1, t2], and the period of the temporary training data RD2 is [t3, t4]. The period of the temporary test data SD is (t2, t3). There is no blank period G between the temporary training data RD1 or RD2 and the temporary test data SD.

As illustrated in a band B3A of a third stage, the detection unit 13 detects the anomaly value AV from the temporary test data SD based on the temporary training data RD1 and RD2 (see step S13). The anomaly period in which the anomaly value AV is detected is [tP1, tP2].

As illustrated in a band B4A of a fourth stage, the generation unit 14 generates two pieces of training data XD1 and XD2 by excluding the anomaly period [tP1, tP2] in which the anomaly value AV is detected from the period [t1, t4] of the operation data OD (see step S14). The period of the training data XD1 is [t1, tP1), and the period of the training data XD2 is (tP2, t4].

According to the first embodiment, the training data generation apparatus 1 detects the anomaly value AV from the period of the temporary test data SD. The training data generation apparatus 1 generates the training data XD by excluding the anomaly period in which the anomaly value AV is detected from the period of the operation data OD. Therefore, the training data generation apparatus 1 can appropriately generate the training data XD such that the training data XD includes normal data and does not include anomaly data. In a case of being trained on the training data XD, the machine training model can detect an anomaly value AV from any operation data OD of the device. That is, the training data generation apparatus 1 can support anomaly detection by the machine training model.

### (First modification of first embodiment)

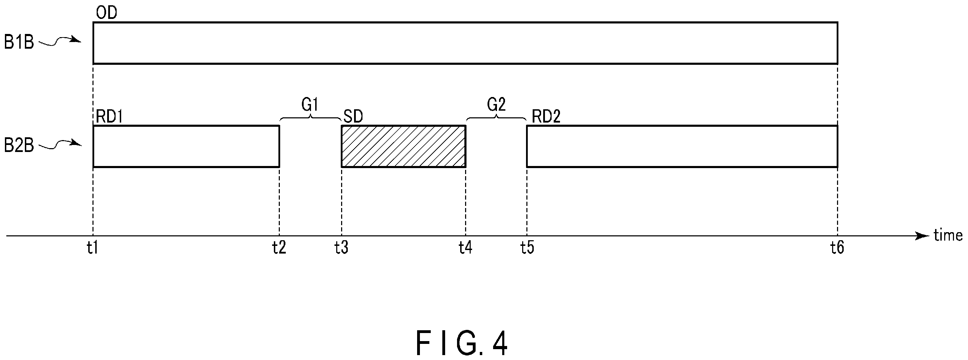

FIG. 4 is an illustrative diagram illustrating division processing of the operation data OD according to a first modification of the first embodiment. FIG. 4 sequentially illustrates each processing according to steps S11 and S12 in FIG. 2. A period of each data in each processing is indicated by bands B1B and B2B.

As illustrated in a band B1B of a first stage, the acquisition unit 11 acquires the operation data OD (see step S11). The period of the operation data OD is [t1, t6].

As illustrated in the band B2B of a second stage, the division unit 12 divides the operation data OD into two pieces of temporary training data RD1 and RD2 and one piece of temporary test data SD (see step S12). The period of the temporary training data RD1 is [t1, t2], and the period of the temporary training data RD2 is [t5, t6]. The period of the temporary test data SD is [t3, t4].

A blank period G1(t2, t3) exists between the temporary training data RD1 and the temporary test data SD. A blank period G2(t4, t5) exists between the temporary training data RD2 and the temporary test data SD. The two blank periods G1 and G2 do not belong to the periods of the two pieces of temporary training data RD1 and RD2, and do not belong to the period of the temporary test data SD.

It is assumed that the anomaly value AV exists in at least one of the two blank periods G1 and G2 and the temporary test data SD. Further, it is assumed that there is no anomaly value AV in the temporary training data RD1 and RD2. In this case, the detection unit 13 can detect the anomaly value AV from the temporary test data SD based on the temporary training data RD1 and RD2 not including the anomaly value AV. On the other hand, it is assumed that there is no blank period G between the temporary training data RD and the temporary test data SD, the blank period G1 is included in the temporary training data RD1, and the blank period G2 is included in the temporary training data RD2. In this case, since the temporary training data RD includes the anomaly value AV, the anomaly value AV is not detected from the temporary test data SD.

According to the first modification of the first embodiment, the training data generation apparatus 1 divides the operation data OD such that the blank period G exists between the temporary training data RD and the temporary test data SD. Therefore, even in a case where the anomaly value AV is included in the blank period G adjacent to the period of the temporary test data SD, the training data generation apparatus 1 can detect the anomaly value AV from the temporary test data SD.

### (Second modification of first embodiment)

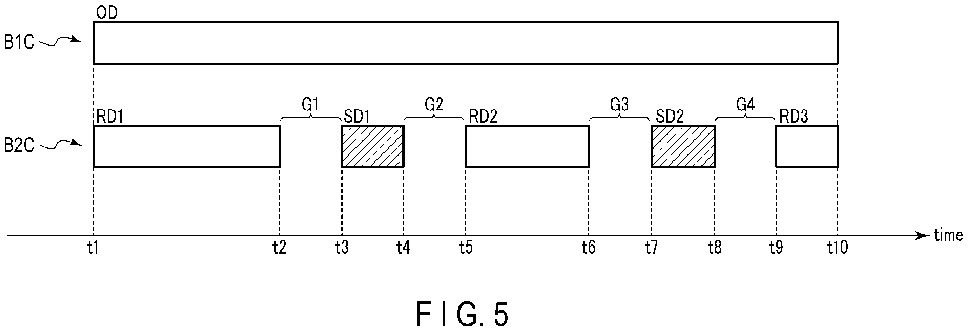

FIG. 5 is an illustrative diagram illustrating division processing of the operation data OD according to a second modification of the first embodiment. FIG. 5 sequentially illustrates each processing according to steps S11 and S12 in FIG. 2. A period of each data in each processing is indicated by bands B1C and B2C.

As illustrated in a band B1C of a first stage, the acquisition unit 11 acquires the operation data OD (see step S11). The period of the operation data OD is [t1, t10] .

As illustrated in the band B2C of a second stage, the division unit 12 divides the operation data OD into three pieces of temporary training data RD1 to RD3 and two piece of temporary test data SD1 and SD2 (see step S12). The period of the temporary training data RD1 is [t1, t2], the period of the temporary training data RD2 is [t5, t6], and the period of the temporary training data RD3 is [t9, t10]. The period of the temporary test data SD1 is [t3, t4], and the period of the temporary test data SD2 is [t7, t8].

A blank period G1(t2, t3) exists between the temporary training data RD1 and the temporary test data SD1. A blank period G2(t4, t5) exists between the temporary training data RD2 and the temporary test data SD1. A blank period G3(t6, t7) exists between the temporary training data RD2 and the temporary test data SD2. A blank period G4(t8, t9) exists between the temporary training data RD3 and the temporary test data SD2. The four blank periods G1 to G4 do not belong to the periods of the three pieces of temporary training data RD1 to RD3, and do not belong to the periods of the two pieces of temporary test data SD1 and SD2.

According to the second modification of the first embodiment, the training data generation apparatus 1 divides the operation data OD into a plurality of pieces of temporary test data SD. The training data generation apparatus 1 detects the anomaly value AV from each of the plurality of temporary test data SD based on the plurality of temporary training data RD. Therefore, according to the second modification, the same effects as those of the first embodiment and the first modification can be obtained.

### (Third modification of first embodiment)

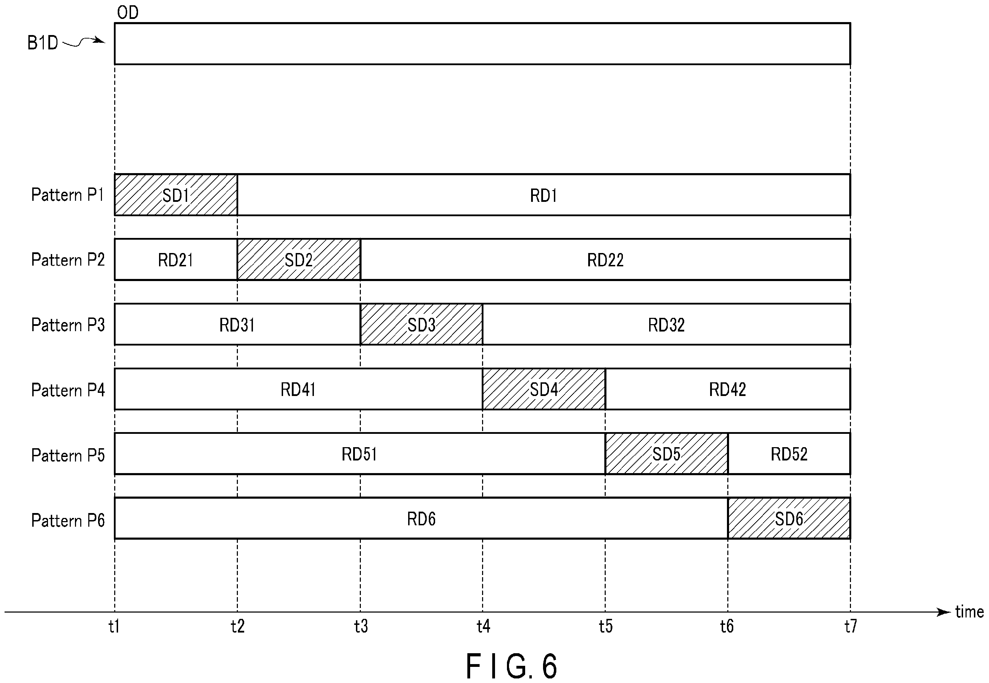

FIG. 6 is an illustrative diagram illustrating division processing of the operation data OD according to a third modification of the first embodiment. FIG. 6 sequentially illustrates each processing according to steps S11 and S12 in FIG. 2. A period of each data in each processing is indicated by a band B1D and six patterns P1 to P6.

As illustrated in a band B1D of a first stage, the acquisition unit 11 acquires the operation data OD (see step S11). The period of the operation data OD is [t1, t7].

As illustrated in the patterns P1 to P6 in second to seventh stages, the division unit 12 divides the operation data OD into six patterns P1 to P6 related to a combination of the temporary training data RD and the temporary test data SD (see step S12). The division unit 12 may divide the operation data OD such that the period of each of the six pieces of temporary test data SD1 to SD6 is different among the six patterns P1 to P6. The division unit 12 may divide the period [t1, t7] of the operation data OD into the periods of the six pieces of temporary test data SD1 to SD6 in the six patterns P1 to P6.

In the pattern P1, the period of the temporary test data SD1 is [t1, t2], and the period of the temporary training data RD1 is (t2, t7]. In the pattern P2, the period of the temporary test data SD2 is (t2, t3], the period of the temporary training data RD21 is [t1, t2], and the period of the temporary training data RD22 is (t3, t7]. In the pattern P3, the period of temporary test data SD3 is (t3, t4], the period of temporary training data RD31 is [t1, t3], and the period of temporary training data RD32 is (t4, t7].

In the pattern P4, the period of the temporary test data SD4 is (t4, t5], the period of the temporary training data RD41 is [t1, t4], and the period of the temporary training data RD42 is (t5, t7]. In the pattern P5, the period of the temporary test data SD5 is (t5, t6], the period of the temporary training data RD51 is [t1, t5], and the period of the temporary training data RD52 is (t6, t7]. In the pattern P6, the period of the temporary test data SD6 is (t6, t7], and the period of the temporary training data RD6 is [t1, t6]. The periods of two adjacent temporary test data SD are continuous at a boundary time (start time and end time).

The detection unit 13 detects the anomaly value AV from the temporary test data SD based on the temporary training data RD in each of the six patterns P1 to P6 (see step S13). In the pattern P1, the detection unit 13 detects the anomaly value AV from the temporary test data SD1 based on the temporary training data RD1. In the pattern P2, the detection unit 13 detects the anomaly value AV from the temporary test data SD2 based on the temporary training data RD21 and RD22. In the pattern P3, the detection unit 13 detects the anomaly value AV from the temporary test data SD3 based on the temporary training data RD31 and RD32.

In the pattern P4, the detection unit 13 detects the anomaly value AV from the temporary test data SD4 based on the temporary training data RD41 and RD42. In the pattern P5, the detection unit 13 detects the anomaly value AV from the temporary test data SD5 based on the temporary training data RD51 and RD52. In the pattern P6, the detection unit 13 detects the anomaly value AV from the temporary test data SD6 based on the temporary training data RD6. In this manner, the detection unit 13 can detect the anomaly value AV from the entire period of the operation data OD [t1, t7] .

The periods of the six pieces of temporary test data SD1 to SD6 do not overlap each other. In another example, the periods of the temporary test data SD may overlap each other. In a case where duplication is permitted, the total period of each period of the temporary test data SD may correspond to the entire period of the operation data OD. In this case, the detection unit 13 can detect the anomaly value AV from the entire period of the operation data OD.

The generation unit 14 generates the training data XD by excluding the anomaly period in which the anomaly value AV is detected in the six patterns P1 to P6 from the period of the operation data OD [t1, t7] (see step S14).

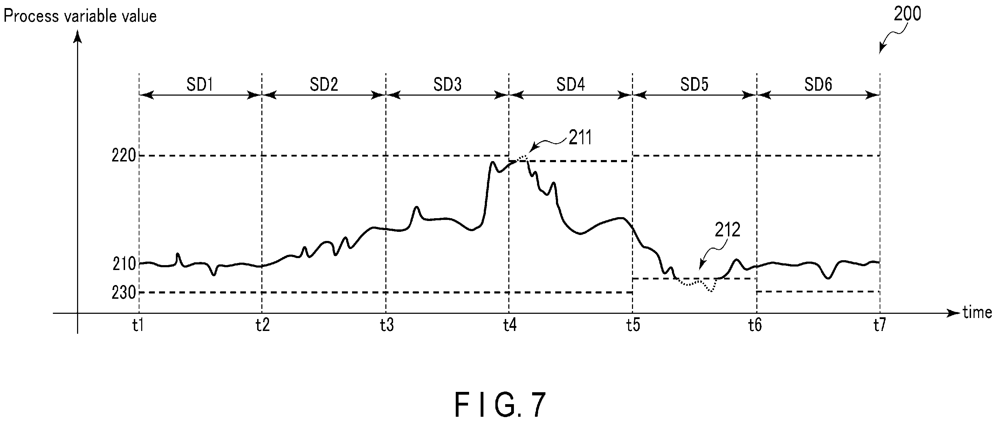

FIG. 7 is an illustrative diagram illustrating detection processing of an anomaly value AV according to a third modification of the first embodiment. FIG. 7 shows a time-series graph 200 relating to the operation data OD of FIG. 6. The horizontal axis of the time-series graph 200 indicates time. The vertical axis of the time-series graph 200 indicates the value of the process variable included in the operation data OD. The time-series data 210 indicates a temporal change related to the value of the process variable by a solid line and a dotted line. In the time-series data 210, portions 211 and 212 in the anomaly period in which the anomaly value AV is detected are emphasized by dotted lines.

A period [t1, t7] of the time-series data 210 is divided into periods of six pieces of temporary test data SD1 to SD6. An upper broken line 220 and a lower broken line 230 in the period [t1, t2] of the temporary test data SD1 correspond to the maximum value and the minimum value of the temporary training data RD1, respectively (see pattern P1). The upper broken line 220 and the lower broken line 230 in the period (t2, t3] of the temporary test data SD2 correspond to the maximum value and the minimum value of the temporary training data RD21 and RD22, respectively (see pattern P2). The upper broken line 220 and the lower broken line 230 in the period (t3, t4] of the temporary test data SD3 correspond to the maximum value and the minimum value of the temporary training data RD31 and RD32, respectively (see pattern P3).

The upper broken line 220 and the lower broken line 230 in the period (t4, t5] of the temporary test data SD4 correspond to the maximum value and the minimum value of the temporary training data RD41 and RD42, respectively (see pattern P4). The upper broken line 220 and the lower broken line 230 in the period (t5, t6] of the temporary test data SD5 correspond to the maximum value and the minimum value of the temporary training data RD51 and RD52, respectively (see pattern P5). The upper broken line 220 and the lower broken line 230 in the period (t6, t7] of the temporary test data SD6 correspond to the maximum value and the minimum value of the temporary training data RD6, respectively (see pattern P6).

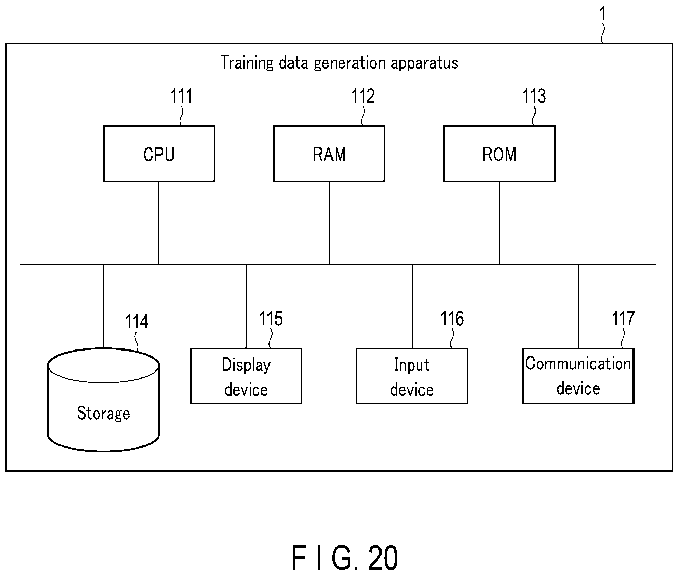

The time-series graph 200 may be displayed on a display device (see FIG. 20). The user can visually recognize the displayed time-series graph 200 and recognize a temporal change of the time-series data 210. The user can visually recognize the portions 211 and 212 in the time-series data 210 and easily recognize the anomaly value AV and the anomaly period. The user can recognize that the value of the time-series data 210 exceeds the upper broken line 220 in the period (t4, t5] of the temporary test data SD4 based on the portion 211. Based on the portion 212, the user can recognize that the value of the time-series data 210 falls below the lower broken line 230 in the period (t5, t6] of the temporary test data SD5.

According to the third modification of the first embodiment, the training data generation apparatus 1 divides the operation data OD into a plurality of patterns related to a combination of the temporary training data RD and the temporary test data SD. The training data generation apparatus 1 detects the anomaly value AV from the temporary test data SD based on the temporary training data RD in each of the plurality of patterns. Therefore, the training data generation apparatus 1 can detect the anomaly value AV from a plurality of periods in the operation data OD. Since the training data generation apparatus 1 excludes each anomaly period in which the anomaly value AV is detected from the operation data OD, the training data generation apparatus 1 can generate the training data XD having less anomaly data than the first embodiment.

### (Fourth modification of first embodiment)

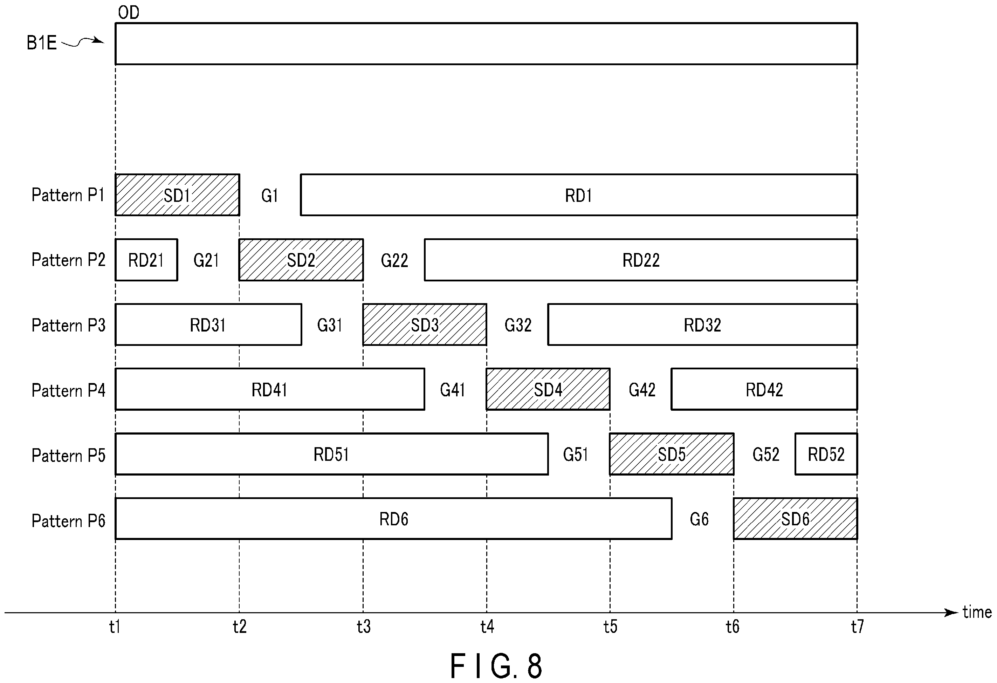

FIG. 8 is an illustrative diagram illustrating division processing of the operation data OD according to a fourth modification of the first embodiment. FIG. 8 sequentially illustrates each processing according to steps S11 and S12 of FIG. 2. A period of each data in each processing is indicated by a band B1E and six patterns P1 to P6.

As illustrated in a band B1E of a first stage, the acquisition unit 11 acquires the operation data OD (see step S11). The period of the operation data OD is [t1, t7].

As illustrated in the patterns P1 to P6 in second to seventh stages, the division unit 12 divides the operation data OD into six patterns P1 to P6 related to a combination of the temporary training data RD and the temporary test data SD (see step S12). In the six patterns P1 to P6, the periods of the temporary test data SD1 to SD6 are similar to those in the third modification. In particular, the lengths of the periods of the temporary test data SD1 to SD6 are the same.

In the pattern P1, a blank period G1 exists between the temporary training data RD1 and the temporary test data SD1. In the pattern P2, a blank period G21 exists between the temporary training data RD21 and the temporary test data SD2, and a blank period G22 exists between the temporary training data RD22 and the temporary test data SD2. In the pattern P3, a blank period G31 exists between the temporary training data RD31 and the temporary test data SD3, and a blank period G32 exists between the temporary training data RD32 and the temporary test data SD3.

In the pattern P4, a blank period G41 exists between the temporary training data RD41 and the temporary test data SD4, and a blank period G42 exists between the temporary training data RD42 and the temporary test data SD4. In the pattern P5, a blank period G51 exists between the temporary training data RD51 and the temporary test data SD5, and a blank period G52 exists between the temporary training data RD52 and the temporary test data SD5. In the pattern P6, a blank period G6 exists between the temporary training data RD6 and the temporary test data SD6. In particular, a length of each of the ten blank periods G1 to G6 is the same and corresponds to 1/2 of the length of each period of the six pieces of temporary test data SD1 to SD6.

The detection unit 13 detects the anomaly value AV from the temporary test data SD based on the temporary training data RD in each of the six patterns P1 to P6 (see step S13). A method of detecting the anomaly value AV is similar to that in the third modification.

The generation unit 14 generates the training data XD by excluding the anomaly period in which the anomaly value AV is detected in the six patterns P1 to P6 from the period of the operation data OD [t1, t7] (see step S14). A method of generating the training data XD is similar to that of the third modification.

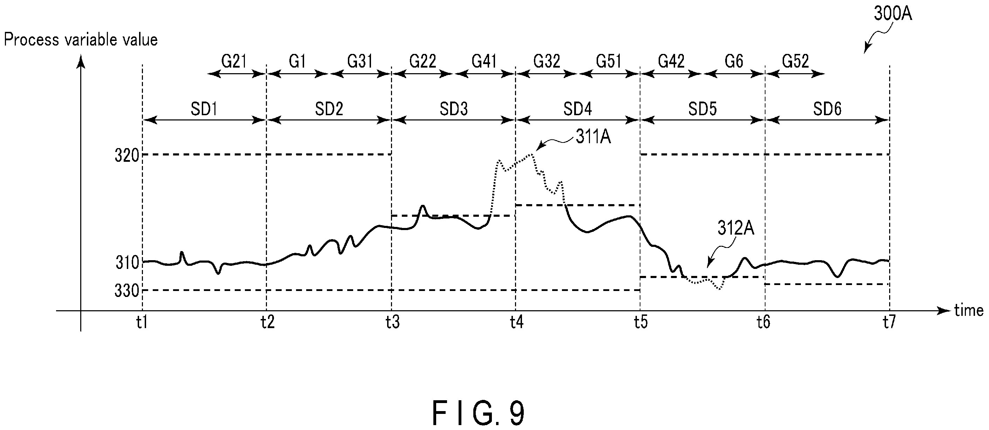

FIG. 9 is a first illustrative diagram illustrating detection processing of the anomaly value AV according to the fourth modification of the first embodiment. FIG. 9 illustrates a time-series graph 300A regarding the operation data OD of FIG. 8. The time-series graph 300A is similar to the time-series graph 200 of FIG. 7. In a time-series data 310, portions 311A and 312A in the anomaly period in which the anomaly value AV is detected are emphasized by dotted lines.

A period [t1, t7] of the time-series data 310 is divided into a period of six pieces of temporary test data SD1 to SD6. An upper broken line 320 and a lower broken line 330 in the period [t1, t2] of the temporary test data SD1 correspond to the maximum value and the minimum value of the temporary training data RD1, respectively (see pattern P1). The upper broken line 320 and the lower broken line 330 are similar to the upper broken line 220 and the lower broken line 230 in FIG. 7, respectively.

Unlike the third modification, in the fourth modification, a blank period G exists between the temporary training data RD and the temporary test data SD. That is, the length of the period of the temporary training data RD is different between the third modification and the fourth modification. Therefore, the positions of the upper broken line 320 and the lower broken line 330 indicating the maximum value and the minimum value in the temporary training data RD may be different from the positions of the upper broken line 220 and the lower broken line 230 in FIG. 7.

The time-series graph 300A may be displayed on a display device (see FIG. 20). The user can visually recognize the time-series graph 300A and recognize a temporal change of the time-series data 310. The user can visually recognize the portions 311A and 312A in the time-series data 310 and easily recognize the anomaly value AV and the anomaly period. In particular, the period (anomaly period) corresponding to the portion 311A is longer than the period of the portion 211 in FIG. 7. On the other hand, the period (anomaly period) corresponding to the portion 312A is the same as the period of the portion 212 in FIG. 7.

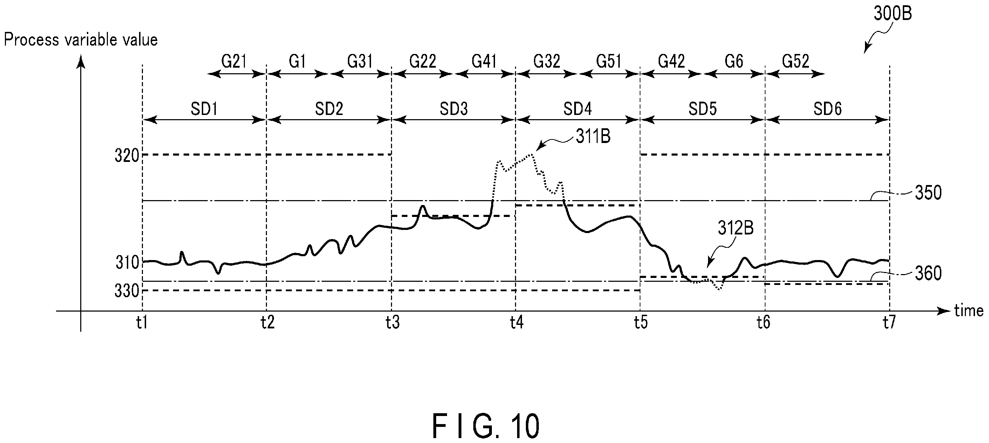

FIG. 10 is a second illustrative diagram illustrating the detection processing of the anomaly value AV according to the fourth modification of the first embodiment. A time-series graph 300B of FIG. 10 is a graph in which an upper one-dot chain line 350 and a lower one-dot chain line 360 are superimposed on the time-series graph 300A of FIG. 9. A portion 311B exceeding the upper one-dot chain line 350 in the time-series data 310 indicates a true anomaly value AV. A portion 312B below the lower one-dot chain line 360 of the time-series data 310 indicates a true anomaly value AV. The true anomaly value AV is an ideal anomaly value to be detected from the time-series data 310. The period in which the true anomaly value AV is detected can also be said to be a true anomaly period.

The time-series graph 200 in FIG. 7 is compared with the time-series graph 300B in FIG. 10. The period (anomaly period) of the portion 211 in the time-series graph 200 is much shorter than the period (true anomaly period) of the portion 311B in the time-series graph 300B and does not substantially coincide with each other. That is, in the third modification according to FIG. 7, the training data generation apparatus 1 detects only a part of the true anomaly period out of the entire true anomaly period, and does not detect the remaining most of the true anomaly periods.

The time-series graph 300A in FIG. 9 is compared with the time-series graph 300B in FIG. 10. The period (anomaly period) of the portion 311A in the time-series graph 300A is slightly longer than the period (true anomaly period) of the portion 311B in the time-series graph 300B, and includes the period of the portion 311B. That is, in the fourth modification according to FIG. 9, the training data generation apparatus 1 detects the entire true anomaly period. As compared with the third modification, the training data generation apparatus 1 according to the fourth modification detects the anomaly value (or anomaly period) more appropriately, and thus, can generate the training data XD more appropriately.

According to the fourth modification of the first embodiment, the training data generation apparatus 1 divides the operation data OD into a plurality of patterns related to a combination of the temporary training data RD and the temporary test data SD. The training data generation apparatus 1 divides the operation data OD such that a blank period G exists between the temporary training data RD and the temporary test data SD in each of the plurality of patterns. Therefore, according to the fourth modification, the similar effects to those of the first modification and the third modification can be obtained. In the fourth modification, the anomaly value AV is less likely to be mixed in the training data XD as compared with the third modification. As a result, the training data generation apparatus 1 can generate training data XD having higher quality than that of the third modification.

### (Second Embodiment)

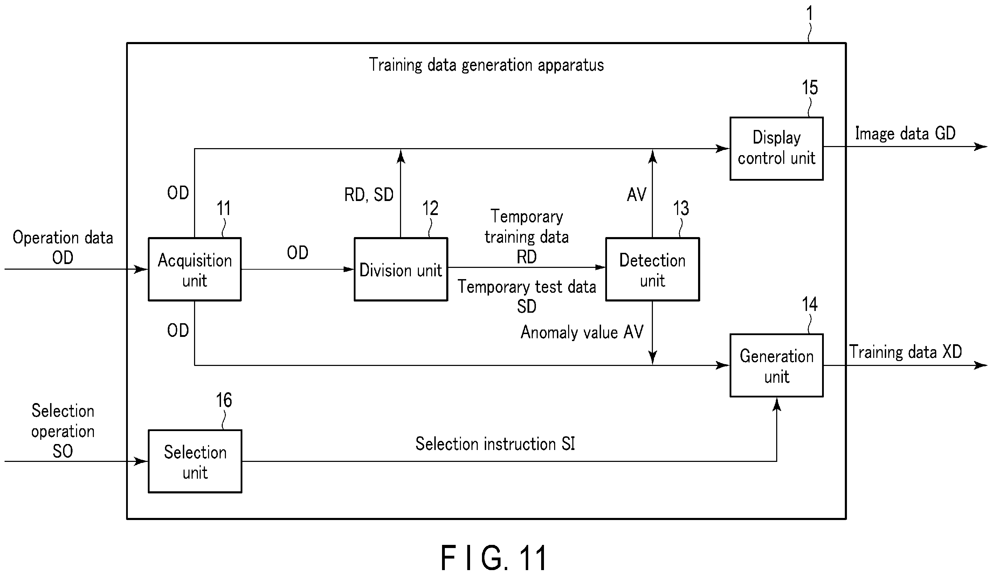

FIG. 11 is a functional configuration diagram of a training data generation apparatus 1 according to a second embodiment. In the second embodiment, the training data generation apparatus 1 further includes a display control unit 15 and a selection unit 16 in addition to the acquisition unit 11, the division unit 12, the detection unit 13, and the generation unit 14.

The display control unit 15 controls various displays. The display control unit 15 receives various data (example: operation data OD,temporary training data RD, temporary test data SD, anomaly value AV) from the acquisition unit 11, the division unit 12, and the detection unit 13. The display control unit 15 generates the image data GD based on the received various data. The display control unit 15 outputs the generated image data GD to the outside of the training data generation apparatus 1 (for example, a display device).

The selection unit 16 performs various selections. The selection unit 16 generates a selection instruction SI corresponding to the selection operation SO in response to the selection operation SO from the user. The selection unit 16 transmits the generated selection instruction SI to the generation unit 14. In response to a feedback operation from the user, the selection unit 16 may generate a feedback instruction corresponding to the feedback operation and transmit the feedback instruction to the generation unit 14.

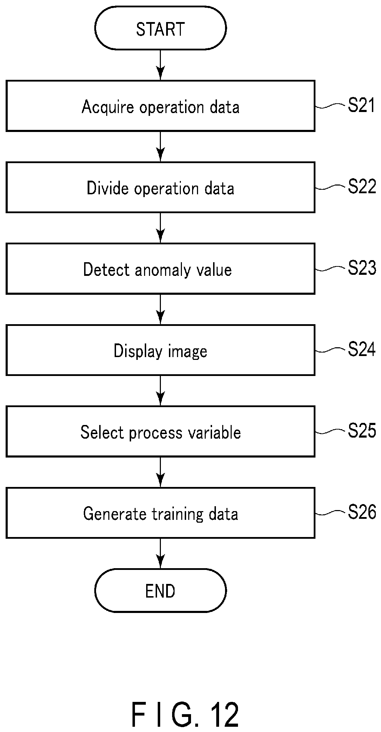

FIG. 12 is an operation flowchart of the training data generation apparatus 1 according to the second embodiment. The training data generation apparatus 1 sequentially executes each processing according to steps S21 to S26.

(Step S21) First, the training data generation apparatus 1 acquires the operation data OD through the acquisition unit 11. Step S21 is similar to step S11. The acquisition unit 11 transmits the operation data OD to the division unit 12, the generation unit 14, and the display control unit 15.

(Step S22) Next, the training data generation apparatus 1 divides the operation data OD through the division unit 12. Step S22 is similar to step S12. The division unit 12 transmits the temporary training data RD and the temporary test data SD to the detection unit 13 and the display control unit 15.

(Step S23) Subsequently, the training data generation apparatus 1 detects the anomaly value AV through the detection unit 13. Step S23 is similar to step S13. The detection unit 13 transmits the anomaly value AV to the generation unit 14 and the display control unit 15.

(Step S24) Subsequently, the training data generation apparatus 1 displays an image through the display control unit 15. The display control unit 15 generates the image data GD based on the operation data OD, the temporary training data RD, the temporary test data SD, and the anomaly value AV obtained in steps S21 to S23. The display control unit 15 displays an image based on the image data GD on the display device.

The display control unit 15 may display the time-series graph 200 of FIG. 7 or may display the time-series graph 300A or 300B of FIG. 9 or 10 on the display device as the image. According to the time-series graph 300A of FIG. 9, the anomaly value AV and the anomaly period in the time-series data 310 are indicated by portions 311A and 312A. Like portions 311A and 312A, the anomaly portions may be indicated by different line types (e.g., dotted lines). Alternatively, the anomaly portion may be indicated by a different color. That is, the anomaly portion may be shown in a manner distinguishable from the normal portion. With such a display mode, the user can easily recognize the anomaly portion.

In a case where the detection unit 13 detects the anomaly value AV for a plurality of process variables included in the operation data OD, the display control unit 15 may display a time-series graph related to each of the plurality of process variables. The display control unit 15 may display each of the time-series graphs in parallel. The display control unit 15 may display a time-series graph related to the process variable having a first ID. The display control unit 15 may switch from the currently displayed time-series graph to another time-series graph for display in accordance with an instruction from the user.

Conversely, in a case where the detection unit 13 has not detected the anomaly value AV for each of the plurality of process variables included in the operation data OD, the display control unit 15 may display a character string indicating that the anomaly value AV has not been detected.

(Step S25) Subsequently, the training data generation apparatus 1 selects a process variable through the selection unit 16. The selection unit 16 receives a selection operation SO (or a feedback operation) from the user for the image displayed in step S24. The selection operation SO may be an operation of selecting a specific process variable that the user has determined to be truly anomaly. The selection operation SO may be an operation in which the user selects a desired anomaly period from among the anomaly periods in the time-series graph of the process variable. The selection operation SO may be input through an input device (see FIG. 20). The selection operation SO may be an operation of selecting a specific process variable determined not to be anomaly by the user, or may be an operation of selecting a specific period determined not to be anomaly by the user. The training data generation apparatus 1 can perform various types of processing (for example, identification of an anomaly period) according to a user operation by determining an item to be selected by the user in advance.

In a case where the user selects a specific process variable, a check box corresponding to each of the plurality of process variables may be displayed on the display device as a graphical user interface (GUI). In a case where the user selects a desired check box, a selection instruction SI for selecting a process variable related to the check box is generated. The selection unit 16 transmits the selection instruction SI corresponding to the various selection operations SO to the generation unit 14.

(Step S26) Finally, the training data generation apparatus 1 generates the training data XD through the generation unit 14. The generation unit 14 performs processing corresponding to the selection instruction SI transmitted in step S25. In a case where the selection instruction SI is an instruction to select a specific process variable, the generation unit 14 generates the training data XD by excluding the anomaly period from the time-series data corresponding to the specific process variable. In a case where the selection instruction SI is an instruction to select a specific anomaly period, the generation unit 14 generates the training data XD by excluding the specific anomaly period from the time-series data of the process variable.

In a case where there is no process variable corresponding to the selection instruction SI, the generation unit 14 generates the operation data OD as the training data XD as it is. In a case where there is a plurality of process variables corresponding to the selection instruction SI, the generation unit 14 excludes each anomaly period detected in the time-series data of each of the plurality of process variables from the operation data OD and generates the training data XD.

According to the second embodiment, the training data generation apparatus 1 generates the training data XD based on the selection operation SO from the user. The training data generation apparatus 1 generates the training data XD by excluding the anomaly period from the time-series data of the process variable for the process variable determined to be truly anomaly by the user. Alternatively, for an anomaly period determined by the user to be truly anomaly, the training data generation apparatus 1 generates the training data XD by excluding the anomaly period from the time-series data of the process variable. Therefore, in a case where the training data generation apparatus 1 erroneously detects a period which is originally a normal period as an anomaly period, the user does not select this period, so that it is possible to prevent the period from being excluded.

Further, the training data generation apparatus 1 displays the anomaly period of the operation data OD in a mode distinguishable from the normal period. With such a display mode, the user can easily recognize the anomaly period of the operation data OD and easily select the anomaly period as the exclusion target. The user automatically generates the training data XD by selecting a process variable indicating an anomaly behavior. Therefore, the training data generation apparatus 1 can reduce the labor of the user to manually generate the training data XD.

### (First modification of second embodiment)

The detection unit 13 may detect the anomaly value AV from the temporary test data SD based on the statistic of the process variable related to the temporary training data RD. The detection unit 13 may detect the value of the temporary test data SD not included in a range from an L percentile to an H percentile of the temporary training data RD as the anomaly value AV. For example, L = 5 and H = 95. In the case of L = 0, the 0 percentile corresponds to the minimum value. In the case of H = 100, the 100 percentile corresponds to the maximum value. In the case of L = 0 and H = 100, the first modification corresponds to the second embodiment.

For example, L > 0 and H < 100 are satisfied. In this case, the training data generation apparatus 1 can easily detect the true anomaly value AV.

### (Second modification of second embodiment)

The detection unit 13 may detect a value whose frequency (or normalized frequency) is less than a threshold in a frequency distribution (or normalized frequency distribution) of the process variable related to the temporary training data RD as the anomaly value AV from the temporary test data SD. The detection unit 13 detects a value present in the temporary training data RD at a frequency less than the threshold as the anomaly value AV in the temporary test data SD.

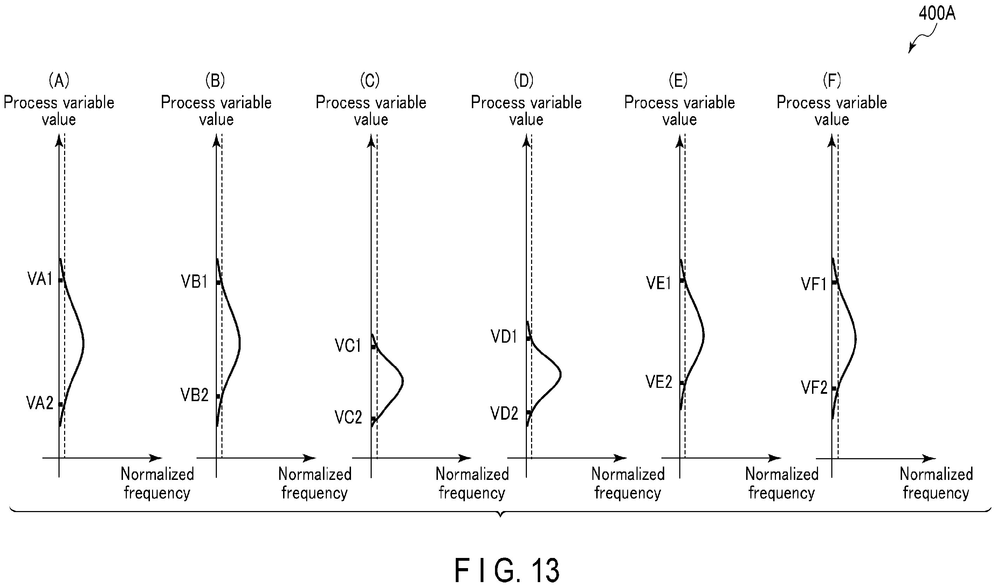

FIG. 13 is a frequency distribution diagram 400A of the temporary training data RD according to a second modification of the second embodiment. FIGS. 13(A) to 13(F) illustrate the normalized frequency distributions of the temporary training data RD1 to RD6 corresponding to the temporary test data SD1 to SD6, respectively, in order from the left. The frequency distribution diagram 400A corresponds to the patterns P1 to P6 of FIG. 8 and may be displayed on the display device.

As illustrated in FIGS. 13(A) to 13(F), solid lines indicate the normalized frequencies of the temporary training data RD1 to RD6. The broken line indicates a threshold for the normalized frequency. In FIG. 13(A), in the temporary test data SD1, a value larger than the value VA1 and a value smaller than the value VA2 are detected as the anomaly values AV. In FIG. 13(B), in the temporary test data SD2, a value larger than the value VB1 and a value smaller than the value VB2 are detected as the anomaly values AV. In FIG. 13(C), in the temporary test data SD3, a value larger than the value VC1 and a value smaller than the value VC2 are detected as the anomaly values AV. In

FIG. 13(D), in the temporary test data SD4, a value larger than the value VD1 and a value smaller than the value VD2 are detected as the anomaly values AV. In FIG. 13(E), in the temporary test data SD5, a value larger than the value VE1 and a value smaller than the value VE2 are detected as the anomaly values AV. In FIG. 13(F), in the temporary test data SD6, a value larger than the value VF1 and a value smaller than the value VF2 are detected as the anomaly values AV.

According to the second modification of the second embodiment, the similar effects to those of the second embodiment can be obtained.

### (Third modification of second embodiment)

The display control unit 15 may display the frequency distribution (or normalized frequency distribution) of the process variable related to the temporary training data RD. Furthermore, the display control unit 15 may display the frequency distribution (or normalized frequency distribution) of the process variable related to the temporary test data SD for the temporary test data SD corresponding to the temporary training data RD.

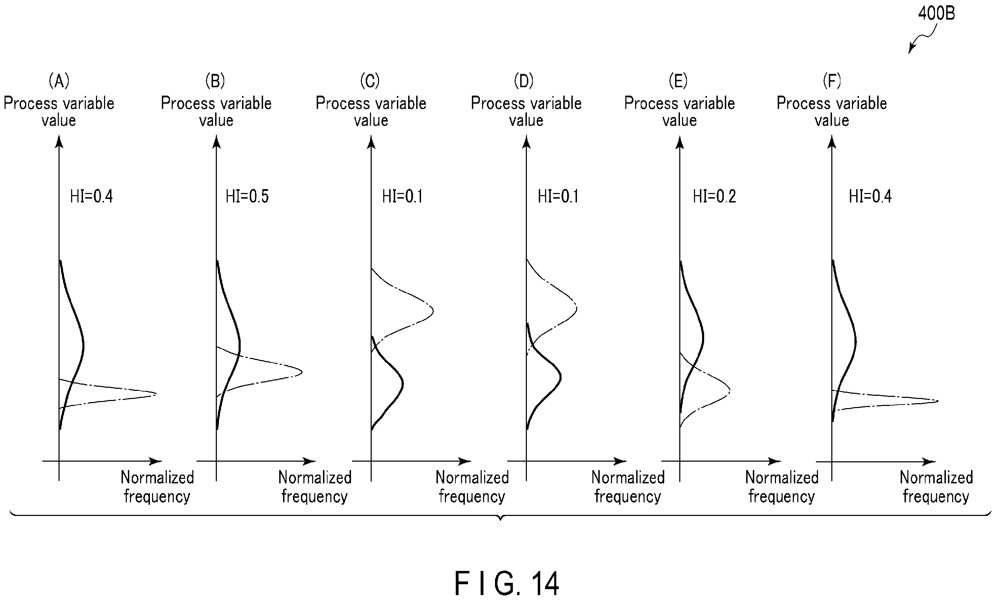

FIG. 14 is a frequency distribution diagram 400B according to a third modification of the second embodiment. FIGS. 14(A) to 14(F) illustrate normalized frequency distributions of the temporary training data RD1 to RD6 and the temporary test data SD1 to SD6 in order from the left. The frequency distribution diagram 400B corresponds to the patterns P1 to P6 of FIG. 8 and may be displayed on the display device.

As illustrated in FIGS. 14(A) to 14(F), the solid line indicates the normalized frequency distribution (first distribution) of the temporary training data RD. A one-dot chain line indicates a normalized frequency distribution (second distribution) of the temporary test data SD. HI (Histogram Intersection) indicates the similarity between the first distribution and the second distribution. Instead of the similarity, another index (examples: Kullback-Leibler Divergence, Jensen-Shannon Divergence, Wasserstein Metric) may be used. A first distribution and a second distribution may be distinguishably displayed by different display colors or the like. At least one of the first distribution, the second distribution, and the similarity between the first distribution and the second distribution may be displayed.

The larger the value of HI, the more similar the first distribution and the second distribution. For example, in a case where the value of HI is less than the threshold, it is defined that the temporary test data SD is not similar to the temporary training data RD. In a case where the threshold is 0.3, the distributions illustrated in FIGS. 14 (C) to 14(E) satisfy HI < 0.3. Therefore, the training data generation apparatus 1 determines that the temporary test data SD3, SD4, and SD5 are not similar to the corresponding training data RD3, RD4, and RD5, respectively.

In a case where HI is less than the threshold, HI may be color-coded, or HI may be surrounded by a frame line. Alternatively, a frame line may be added to the distribution in which HI is less than the threshold, or the distribution may be colored with different colors. In this manner, the training data generation apparatus 1 can highlight and display the temporary test data SD including the anomaly value AV. In a case where the distribution degree of difference is used, the training data generation apparatus 1 may determine that the anomaly value AV is included in the temporary test data SD in a case where the distribution degree of difference exceeds the threshold.

According to the third modification of the second embodiment, the training data generation apparatus 1 displays the distribution of the temporary test data SD and the distribution of the temporary training data RD. The user can easily recognize the difference in distribution between the data. Further, the training data generation apparatus 1 displays a similarity (for example, HI) between the distributions. The user can quantitatively evaluate the similarity of the distribution between the two and easily select a process variable or an anomaly period that is truly determined to be anomaly.

### (Fourth modification of second embodiment)

The detection unit 13 may detect the anomaly value AV from the temporary test data SD using the machine training model trained on the temporary training data RD (see step S23). As the machine training model, a known method may be used (see Patent Literature 2: Japanese Patent Publication No. 2022-074890). Hereinafter, the temporary training data RD and the temporary test data SD of FIG. 8 are used.

The detection unit 13 trains a machine training model for the temporary test data SD1 using the temporary training data RD1 (see pattern P1). The detection unit 13 trains a machine training model for the temporary test data SD2 using the temporary training data RD21 and RD22 (see pattern P2). The detection unit 13 trains a machine training model for the temporary test data SD3 using the temporary training data RD31 and RD32 (see pattern P3).

The detection unit 13 trains a machine training model for the temporary test data SD4 using the temporary training data RD41 and RD42 (see pattern P4). The detection unit 13 trains a machine training model for the temporary test data SD5 using the temporary training data RD51 and RD52 (see pattern P5). The detection unit 13 trains a machine training model for the temporary test data SD6 by the temporary training data RD6 (see pattern P6). In this manner, the detection unit 13 trains a total of six machine training models in the six patterns P1 to P6.

The detection unit 13 uses the machine training model trained for the temporary test data SD1 to generate a predicted value in the period [t1, t2] of the temporary test data SD1. Similarly, the detection unit 13 generates the predicted value in the period of the temporary test data SD2 to SD6 using each machine training model trained for the temporary test data SD2 to SD6. The detection unit 13 transmits the generated predicted value to the display control unit 15.

The detection unit 13 calculates the deviation by subtracting the predicted value corresponding to the temporary test data SD from the value (measured value) of the process variable included in temporary test data SD. The detection unit 13 transmits the calculated deviation to the display control unit 15.

The detection unit 13 detects a timing at which the deviation exceeds the upper threshold and a timing at which the deviation falls below the lower threshold. The detection unit 13 detects the value of the process variable at both timings as the anomaly value AV. The detection unit 13 transmits the anomaly value AV to the display control unit 15.

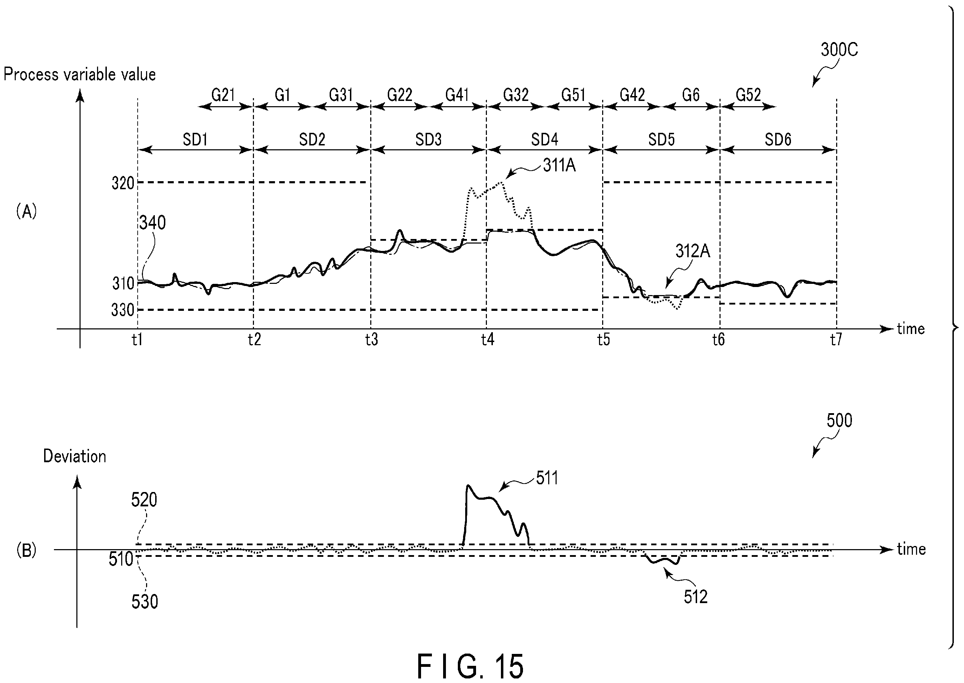

FIG. 15 is an illustrative diagram illustrating anomaly value detection processing according to a fourth modification of the second embodiment. A time-series graph 300C of FIG. 15(A) is similar to the time-series graph 300A of FIG. 9. A time-series graph 500 in FIG. 15(B) shows the deviation.

As illustrated in FIG. 15(A), a time-series data 340 indicating the predicted value is superimposed on the time-series graph 300C. The predicted value is a value predicted by the six machine training models described above. The time-series data 340 indicates a temporal change in the predicted value by a one-dot chain line. The value of the time-series data 310 greatly deviates from the value of the time-series data 340 in the period corresponding to the portions 311A and 312A (in particular, the portion 311A).

As illustrated in FIG. 15(B), the time-series graph 500 illustrates a deviation between the time-series data 310 and the time-series data 340 in the time-series graph 300C. The horizontal axis of the time-series graph 500 indicates time. The vertical axis of the time-series graph 500 indicates the deviation. The time-series data 510 indicates a temporal change in the deviation by a dotted line and a solid line. An upper broken line 520 indicates an upper threshold of the deviation. A lower broken line 530 indicates a lower threshold of the deviation.

The dotted line portion of the time-series data 510 indicates that the deviation is included in a value range between the upper threshold and the lower threshold. A solid line portion of the time-series data 510 indicates that the deviation deviates from the value range (that is, the anomaly value AV). A portion 511 of the time-series data 510 indicates that the deviation is above the upper threshold. A portion 512 of the time-series data 510 indicates that the deviation is below the lower threshold. The portions 511 and 512 correspond to portions 311A and 312A, respectively. The portions 511 and 512 may be displayed in a mode distinguishable from the normal portion by different display colors, line thicknesses, and the like. Such a display mode is user-friendly because the user can easily recognize the anomaly portion.

According to the fourth modification of the second embodiment, the training data generation apparatus 1 calculates the predicted value for the value (measured value) of the temporary test data SD using the machine training model trained on the temporary training data RD. The training data generation apparatus 1 displays a time-series graph relating to the deviation between the measured value and the predicted value. Therefore, the training data generation apparatus 1 can present the anomaly value AV and the anomaly period in the operation data OD, which can be easily recognized by the user.

### (Fifth modification of second embodiment)

In the time-series graph 500 of deviation illustrated in FIG. 15(B), the user may determine that the portion 511 of the time-series data 510 is anomaly and the portion 512 is not anomaly. In this case, the user may perform a selection operation SO for selecting the portion 511. The selection unit 16 may generate the selection instruction SI corresponding to the selection operation SO and transmit the generated selection instruction SI to the generation unit 14. The generation unit 14 generates the training data XD by excluding the anomaly period related to the selection instruction SI from the operation data OD.

The selection unit 16 may receive feedback indicating in which period of the process variable the anomaly is recognized. In this case, the display control unit 15 may display a graphical user interface (GUI) (example: text box, calendar) for inputting a start time and an end time related to the period. The user may specify, through the displayed GUI, a period during which the user determines that the user is anomaly among the period of the portion 511 and the period of the portion 512. The user can specify the time period in more detail through the displayed GUI.

The display control unit 15 may display a button for adding or deleting a GUI for the user to input the anomaly period. Accordingly, even in a case where one process variable includes a plurality of anomaly periods, the user can specify the plurality of anomaly periods.

### (Third Embodiment)

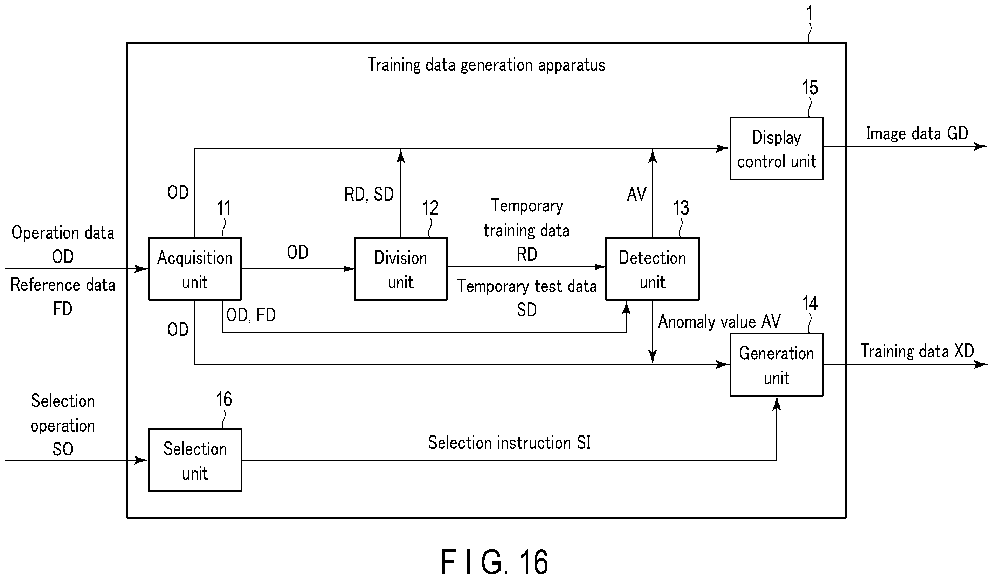

FIG. 16 is a functional configuration diagram of a training data generation apparatus 1 according to a third embodiment. As in the second embodiment, the training data generation apparatus 1 includes an acquisition unit 11, a division unit 12, a detection unit 13, a generation unit 14, a display control unit 15, and a selection unit 16.

The acquisition unit 11 further acquires reference data FD in addition to operation data OD. The reference data FD is data having a period different from that of the operation data OD. The operation data OD and the reference data FD may be data relating to the operation state of the same device and in different periods. A relationship between the operation data OD and the reference data FD is similar to the relationship between the temporary test data SD and the temporary training data RD. The acquisition unit 11 transmits the operation data OD and the reference data FD to the detection unit 13.

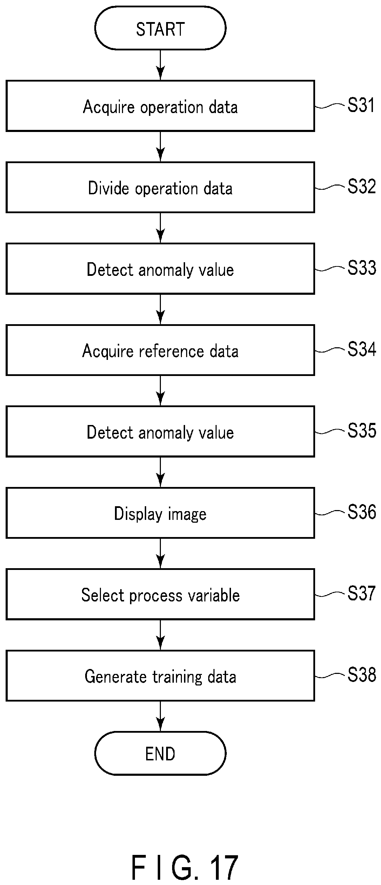

FIG. 17 is an operation flowchart of the training data generation apparatus 1 according to the third embodiment. The training data generation apparatus 1 sequentially executes each processing according to steps S31 to S38.

(Steps S31 to S33) First, the training data generation apparatus 1 acquires the operation data OD through the acquisition unit 11. Next, the training data generation apparatus 1 divides the operation data OD through the division unit 12. Subsequently, the training data generation apparatus 1 detects the anomaly value AV through the detection unit 13. Steps S31 to S33 are similar to steps S21 to S23, respectively.

(Step S34) Subsequently, the training data generation apparatus 1 acquires the reference data FD through the acquisition unit 11.

(Step S35) Subsequently, the training data generation apparatus 1 detects the anomaly value AV through the detection unit 13. The detection unit 13 assumes that the reference data FD acquired in step S34 is data in a normal state (normal data), and detects an anomaly value AV (another anomaly value AV) from the operation data OD. As a method of detecting the anomaly value AV, the above-described arbitrary method can be applied.

The detection unit 13 may determine whether or not a value of the operation data OD is included in a value range between the maximum value and the minimum value related to the reference data FD. The detection unit 13 may calculate the predicted value of the operation data OD using the machine training model trained on the reference data FD. The detection unit 13 may determine whether or not the deviation between the predicted value and the value (measured value) of the operation data OD is included in the value range between the upper threshold and the lower threshold.

(Steps S36 to S38) Subsequently, the training data generation apparatus 1 displays an image through the display control unit 15. Subsequently, the training data generation apparatus 1 selects a process variable through the selection unit 16. Finally, the training data generation apparatus 1 generates the training data XD through the generation unit 14. Steps S36 to S38 are similar to steps S24 to S26, respectively.

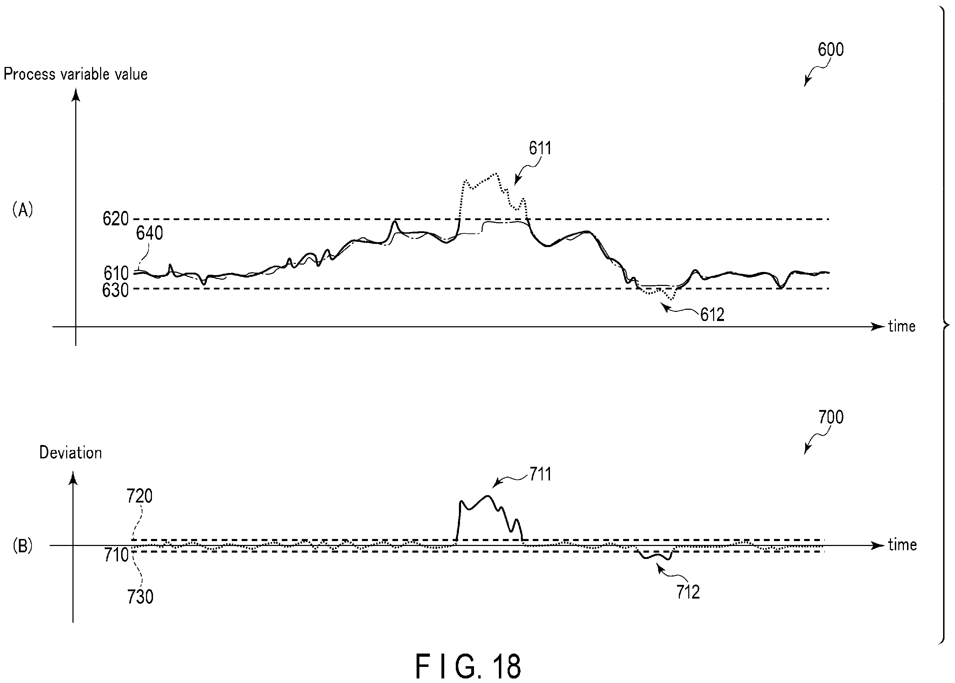

FIG. 18 is an illustrative diagram illustrating anomaly value AV detection processing according to the third embodiment. A time-series graph 600 in FIG. 18(A) is similar to the time-series graph 300 C in FIG. 15(A). A time-series graph 700 in FIG. 18(B) is similar to the time-series graph 500 in FIG. 15(B).

As illustrated in FIG. 18(A), the time-series graph 600 is a graph illustrating a temporal change in the operation data OD. A time-series data 610 indicates a temporal change regarding the value of the process variable of the operation data OD by a solid line and a dotted line. An upper broken line 620 indicates a maximum value of the reference data FD. A lower broken line 630 indicates a minimum value of the reference data FD. Time-series data 640 indicates a predicted value based on the machine training model trained on the reference data FD by a one-dot chain line. A portion 611 of the time-series data 610 indicates a portion (that is, the anomaly value AV) exceeding the upper broken line 620 in the time-series data 610. A portion 612 of the time-series data 610 indicates a portion (that is, the anomaly value AV) of the time-series data 610 below the lower broken line 630.

The user can visually recognize the portions 611 and 612 and easily recognize the anomaly value AV in the time-series data 610. The portions 611 and 612 may be distinguishably displayed by display modes such as different colors and different line thicknesses.

As illustrated in FIG. 18(B), the time-series graph 700 illustrates a deviation between the value (measured value) of the process variable of the operation data OD and the predicted value. The time-series data 710 indicates a temporal change in the deviation by a dotted line and a solid line. An upper broken line 720 indicates an upper threshold for the deviation. A lower broken line 730 indicates a lower threshold for the deviation. A portion 711 of the time-series data 710 indicates a portion (that is, the anomaly value AV) exceeding the upper broken line 720 in the time-series data 710. A portion 712 of the time-series data 710 indicates a portion (that is, the anomaly value AV) of the time-series data 710 below the lower broken line 730.

The user can visually recognize the portions 711 and 712 and easily recognize the anomaly value AV in the time-series data 710. The portions 711 and 712 may be distinguishably displayed by display modes such as different colors and different line thicknesses.

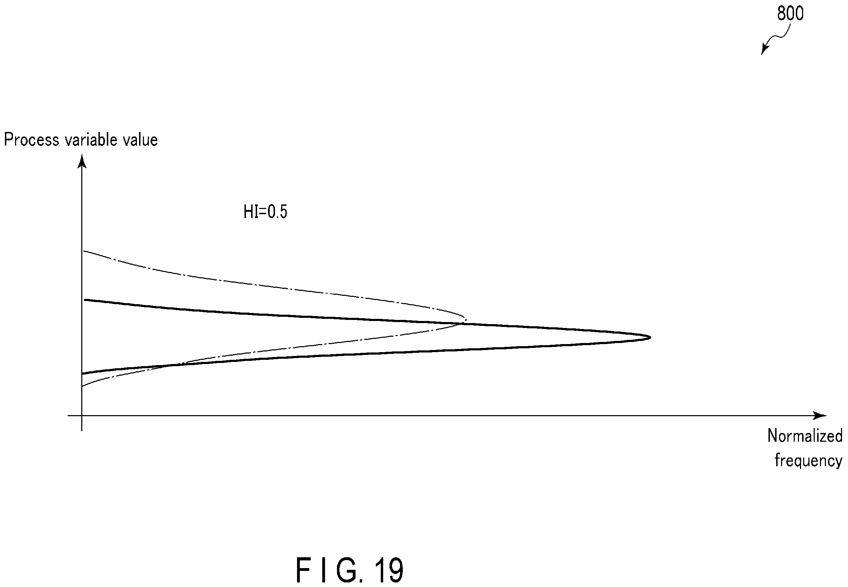

FIG. 19 is a frequency distribution diagram 800 of the operation data OD and the reference data FD according to the third embodiment. The frequency distribution diagram 800 of FIG. 19 is similar to the frequency distribution diagram 400B of FIG. 14.

In the frequency distribution diagram 800, a one-dot chain line indicates a normalized frequency distribution of the operation data OD. A solid line indicates a normalized frequency distribution of the reference data FD. The similarity between the two distributions is displayed as "HI = 0.5".

In a case where there is a transition (shift) between the distribution of the operation data OD and the reference data FD by visually recognizing the frequency distribution diagram 800, the user can easily recognize the transition. The frequency distribution may be displayed instead of the normalized frequency distribution. Instead of HI, another index (described above) indicating the degree of difference between the two distributions may be displayed.

FIG. 20 is a hardware configuration diagram of the training data generation apparatus 1 according to each embodiment. The training data generation apparatus 1 includes a CPU 111, a RAM 112, a ROM 113, a storage 114, a display device 115, an input device 116, and a communication device 117 as components. The components are communicably connected to each other by an internal bus. The training data generation apparatus 1 may include at least some of the components.

The CPU 111 is a processor that executes various processes in accordance with a program. The CPU 111 uses a predetermined area of the RAM 112 as a work area. The CPU 111 reads and executes each program stored in the ROM 113 or the storage 114 to implement each unit (example: acquisition unit 11, division unit 12, detection unit 13, generation unit 14, display control unit 15, selection unit 16). The CPU 111 is an example of a processing unit.

The RAM 112 is a memory that rewritably stores various data. For example, the RAM 112 is a synchronous dynamic random access memory (SDRAM). The RAM 112 is an example of a storage unit.

The ROM 113 is a memory that stores various data in a non-rewritable manner. The ROM 113 is an example of a storage unit.

The storage 114 is various storage media. The storage 114 may be a drive apparatus that writes or reads various data in or from a storage medium. The storage 114 may write or read various data to or from a storage medium according to control by the CPU 111. The storage 114 is an example of a storage unit.

The display device 115 is an apparatus that displays various data. The display device 115 may be a liquid crystal display (LCD). The display device 115 displays various data (examples: image, time-series graph, distribution diagram) based on a display signal from the CPU 111. The display device 115 is an example of a display unit.

The input device 116 is an apparatus that receives various input operations from the user. The input device 116 may be a mouse or a keyboard. The input device 116 receives an operation input by the user as an instruction signal, and transmits the instruction signal to the CPU 111. The input device 116 is an example of an input unit.

The communication device 117 communicates with an external device through a network in accordance with control by the CPU 111. The communication device 117 is an example of a communication unit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A training data generation apparatus (1) comprising:
an acquisition unit (11) configured to acquire operation data related to an operation state of a device in a predetermined period;
a division unit (12) configured to divide the operation data into at least temporary training data and temporary test data;
a detection unit (13) configured to detect an anomaly value from the temporary test data based on the temporary training data; and
a generation unit (14) configured to generate training data from the operation data by excluding an anomaly period in which the anomaly value is detected from the predetermined period.

2. The apparatus (1) according to claim 1, wherein
the division unit (12) is further configured to divide the operation data such that a blank period exists between the temporary training data and the temporary test data.

3. The apparatus (1) according to claim 1, wherein
the division unit (12) is further configured to divide the operation data into a plurality of patterns related to a combination of the temporary training data and the temporary test data, and
the detection unit (13) is further configured to detect the anomaly value from the temporary test data based on the temporary training data in each of the patterns.

4. The apparatus (1) according to claim 3, wherein
the division unit (12) is further configured to divide the operation data such that each period of the temporary test data differs among the patterns.

5. The apparatus (1) according to claim 3, wherein
the division unit (12) is further configured to divide the predetermined period of the operation data into each period of the temporary test data in the patterns.

6. The apparatus (1) according to claim 3, wherein
the division unit (12) is further configured to divide the operation data such that a blank period exists between the temporary training data and the temporary test data in each of the patterns.

7. The apparatus (1) according to claim 1, further comprising a display control unit (15) configured to:
display a time-series graph related to the operation data on a display unit, and
emphasize a portion of the anomaly period in the time-series graph.

8. The apparatus (1) according to claim 7, further comprising a selection unit (16) configured to select at least one anomaly period of each of the anomaly period in the time-series graph in response to an operation from a user, wherein
the generation unit (14) is further configured to generate the training data by excluding the selected anomaly period from the predetermined period.

9. The apparatus (1) according to claim 1, further comprising a display control unit (15), wherein
the operation data includes time-series data related to each of a plurality of process variables, and
the display control unit (15) is configured to:
display a time-series graph related to the time-series data on a display unit, and
emphasize a portion of the anomaly period in the time-series graph.

10. The apparatus (1) according to claim 9, further comprising a selection unit (16) configured to select at least one process variable of each of the process variables in response to an operation from a user, wherein
the generation unit (14) is further configured to generate the training data by excluding the anomaly period from the predetermined period for the time-series data corresponding to the selected process variable.

11. The apparatus (1) according to claim 1, further comprising a display control unit (15) configured to display at least one of a first distribution related to the temporary training data, a second distribution related to the temporary test data, and a similarity between the first distribution and the second distribution on a display unit.

12. The apparatus (1) according to claim 1, wherein
the detection unit (13) is further configured to detect the anomaly value from the temporary test data using a machine training model trained on the temporary training data.

13. The apparatus (1) according to claim 1, wherein
the acquisition unit (11) is further configured to acquire reference data having a period different from a period of the operation data,
the detection unit (13) is further configured to detect another anomaly value from the operation data based on the reference data, and
the generation unit (14) is further configured to generate the training data by excluding another anomaly period in which the another anomaly value is detected from the predetermined period.

14. A training data generation method causing a computer to perform:
acquiring operation data related to an operation state of a device in a predetermined period;
dividing the operation data into at least temporary training data and temporary test data;
detecting an anomaly value from the temporary test data based on the temporary training data; and
generating training data from the operation data by excluding an anomaly period in which the anomaly value is detected from the predetermined period.

15. A training data generation program including computer executable instructions, wherein the instructions, when executed by a processor, cause the processor to perform a method comprising:
acquiring operation data related to an operation state of a device in a predetermined period;
dividing the operation data into at least temporary training data and temporary test data;
detecting an anomaly value from the temporary test data based on the temporary training data; and
generating training data from the operation data by excluding an anomaly period in which the anomaly value is detected from the predetermined period.
